# FASCICULE DE BREVET EUROPEEN

(11) **EP 1 475 288 B1**
(45) Date de publication et mention de la délivrance du brevet: **22.02.2006**
(21) Numéro de dépôt: 04291142.0
(22) Date de dépôt: 04.05.2004
(51) Int. Cl.: B60T 7/06

(54) **Dispositif de pédalier rétractable en cas de choc frontal sur un véhicule**
Pedalvorrichtung, die sich im Falle eines Frontalaufpralles eines Fahrzeuges zurückzieht
Pedal assembly retractable in case of a frontal impact on a vehicle

(30) Priorité: 09.05.2003 FR 0305627
(43) Date de publication de la demande: 10.11.2004
(73) Titulaire: Peugeot Citroen Automobiles S.A., 78140 Vélizy Villacoublay (FR); BCK Technology Ltd, Scunthorpe, North Lincolnshire DM159 GA (GB)
(72) Inventeur: Humbert, Jean-Michel, 93330 Neuilly sur Seine (FR); Chan-Ng-Yok, Laurent, 92800 Puteaux (FR); Endrizzi, Silvio, 2582 HW Den Haag (NL); Jagger, Chris, Wakefield, West Yorkshire WF2 6NY (GB)
(74) Mandataire: Thinat, Michel

(56) Documents cités:
- EP-A- 1 260 419
- US-A- 4 621 538
- US-A1- 2003 019 319

## Description

La présente invention concerne le domaine de la sécurité du conducteur d'un véhicule automobile en cas de choc frontal sur ce dernier.

Avec un pédalier de type habituel, la pédale de frein et la pédale d'embrayage sont montées dans un support de pédalier fixé de manière indéformable au tablier. Lors d'un choc frontal, la structure du véhicule et donc le tablier de support du pédalier se déforment et entraînent simultanément un recul et une remontée du pédalier dans les jambes du conducteur pouvant occasionner des lésions à ses membres inférieurs pouvant aller jusqu'à leur rupture.

Le dispositif selon l'invention est prévu pour limiter le recul et la remontée du pédalier en cas de choc frontal en améliorant ainsi la protection du conducteur.

Le document US 2003/0019319 A1 décrit un dispositif similaire.

La présente invention concerne ainsi de manière générale un dispositif de pédalier rétractable en cas de choc frontal sur un véhicule comportant un support de pédalier monté sur le tablier du véhicule dans la cave à pieds de ce dernier et sur lequel sont articulés d'une part un levier de commande de la pédale de frein, et d'autre part un levier de commande de la pédale d'embrayage.

De manière à résoudre le problème indiqué ci-dessus, le dispositif est caractérisé en ce que le support de pédalier est articulé sur un axe horizontal de rotation perpendiculaire à l'axe longitudinal du véhicule et qui est porté par des platines solidaires du tablier, ce support de pédalier étant fixé à une pièce solidaire du véhicule par des pattes déformables suivant le sens d'un choc frontal, et en ce qu'on prévoit deux pièces solidaires du tablier et présentant chacune une rampe faisant face à l'extrémité supérieure de chaque levier de commande s'étendant au-delà de son axe d'articulation au support de pédalier, de sorte que, en l'absence d'un choc frontal, une action sur la pédale du levier de commande correspondant amène ledit levier de commande à agir sur le frein ou l'embrayage, et que, lors d'un choc frontal sur le véhicule, le support de pédalier pivote vers le tablier autour de l'axe horizontal de rotation en déformant par écrasement les pattes de sorte que les extrémités supérieures des leviers de commande de frein et d'embrayage viennent en appui sur les rampes respectives des deux pièces à rampe pour provoquer le basculement des leviers de commande vers la paroi de fond de la cave à pieds.

Conformément à d'autres caractéristiques avantageuses de l'invention :
- la pièce solidaire du véhicule est le tablier et, lors d'un choc frontal sur le véhicule, le support de pédalier heurte une pièce d'impact solidaire de la structure du véhicule en obligeant les pattes à se déformer et en induisant ainsi le pivotement du support de pédalier ;
- la pièce d'impact solidaire de la structure du véhicule est un élément rigidement lié à la traverse de la planche de bord du véhicule, tel qu'un support colonne destiné à maintenir la colonne de direction par rapport à ladite traverse.
- la pièce solidaire du véhicule est une pièce dont la déformation lors d'un choc est plus faible que celle du tablier et, lors d'un choc frontal sur le véhicule, la déformation relative du tablier par rapport à cette pièce oblige les pattes à se déformer et induit ainsi le pivotement du support de pédalier ;
- la pièce dont la déformation lors d'un choc est plus faible que celle du tablier est la traverse inférieure de baie ;
- les leviers de commande de frein et d'embrayage agissent sur leurs organes de freinage et d'embrayage respectifs par l'intermédiaire de biellettes de commande montées pivotantes sur un axe commun transversal à l'axe longitudinal du véhicule et porté par les deux pièces à rampe et en ce que, lors d'un choc frontal sur le véhicule, la liaison entre les extrémités des leviers de commande et leurs biellettes respectives est libérée de sorte que les pédales de frein et d'embrayage deviennent folles ;
- le support de pédalier est en forme d'étrier dont les deux branches latérales sont articulées à l'axe horizontal de rotation précité et le bras horizontal de liaison des deux branches latérales est disposé en regard de la pièce d'impact à une distance prédéterminée de celle-ci en condition normale d'utilisation.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :

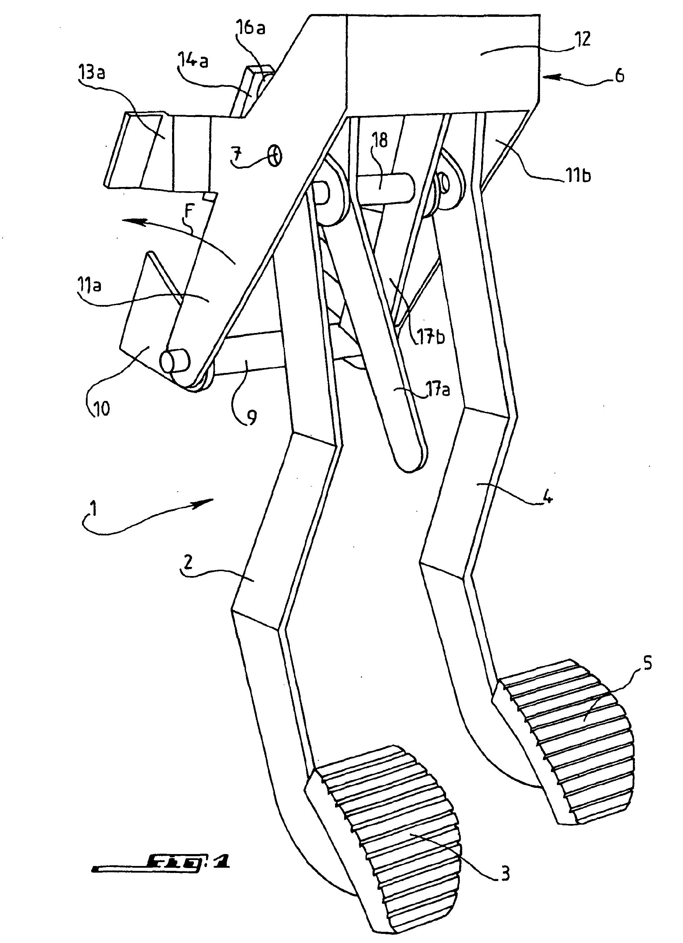

- la figure 1 est une vue en perspective du dispositif de pédalier selon l'invention et montre notamment les leviers de commande des pédales de frein et d'embrayage montés de manière connue sur le tablier d'un véhicule dans la cave à pieds de celui-ci ;
- la figure 2 est une vue à plus grande échelle d'une partie de la figure 1 avec arrachement partiel et montre en particulier des pièces à rampes solidaires du tablier et avec lesquelles coopèrent les extrémités supérieures des leviers de commande des pédales de frein et d'embrayage pour faire basculer ces dernières vers la paroi de fond de la cave à pieds en cas de choc frontal ;
- la figure 3 est une vue de dessus du dispositif des figures précédentes ;
- la figure 4 est une vue de dessus partielle semblable à la figure 3 du dispositif selon l'invention.

Aux dessins, le dispositif selon l'invention de pédalier rétractable en cas de choc frontal sur un véhicule est référencé de manière générale en 1. Comme tout dispositif de pédalier, le dispositif de pédalier rétractable 1 selon l'invention est monté sur le tablier du véhicule dans la cave à pieds de ce dernier et il comporte, d'une part, un levier de commande 2 de la pédale d'embrayage 3 et, d'autre part, un levier de commande 4 de la pédale de frein 5.

Le levier de commande 2 de l'embrayage et le levier de commande 4 du frein sont ici montés sur un support de pédalier 6 en étant articulé sur ce dernier par l'intermédiaire d'axes d'articulation 7 et, respectivement, 8. Par ailleurs, le support de pédalier 6 est lui-même monté sur le tablier du véhicule en étant articulé sur un axe horizontal de rotation 9 perpendiculaire à l'axe longitudinal du véhicule et dont les extrémités sont portées par des platines 10 solidaires du tablier.

Comme on le voit aux dessins, le support de pédalier 6 est en forme d'étrier et comprend deux branches latérales 11a, 11b articulées à leurs extrémités inférieures sur l'axe horizontal de rotation 9 et reliées à leurs extrémités supérieures par un bras de liaison 12.

Conformément à l'invention, le support de pédalier 6, ainsi articulé en 9, est fixé au tablier par des pattes 13a, 13b prévues pour pouvoir se déformer suivant le sens d'un choc frontal exercé sur le véhicule.

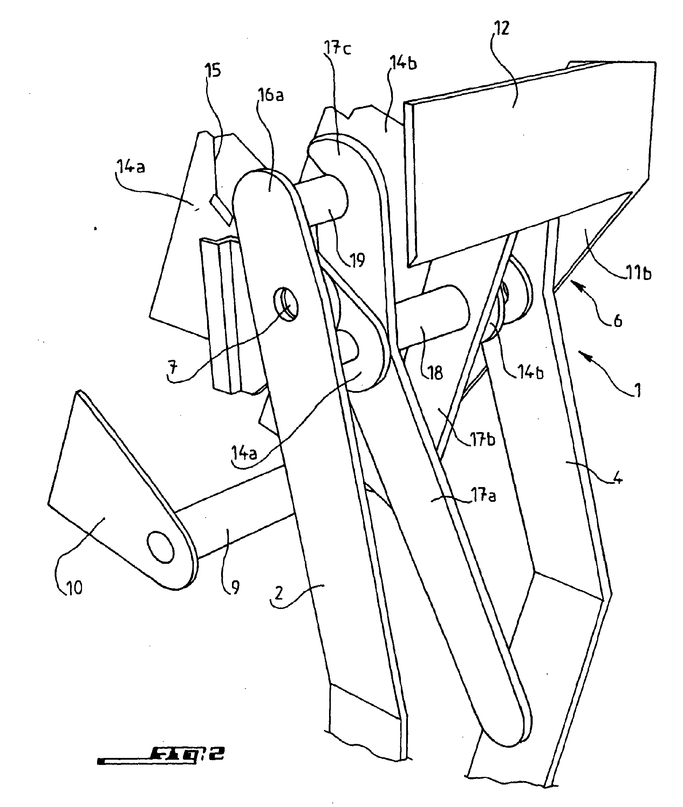

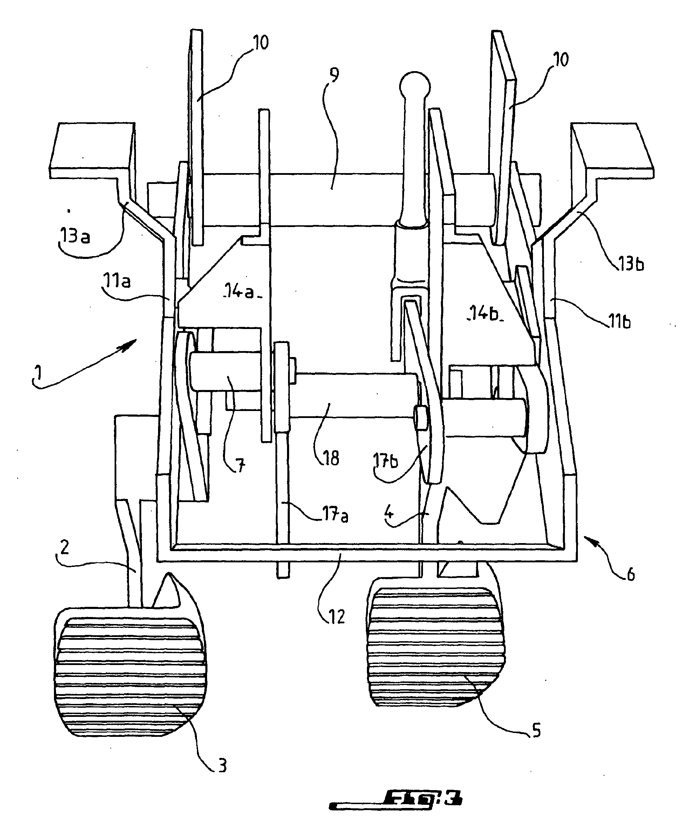

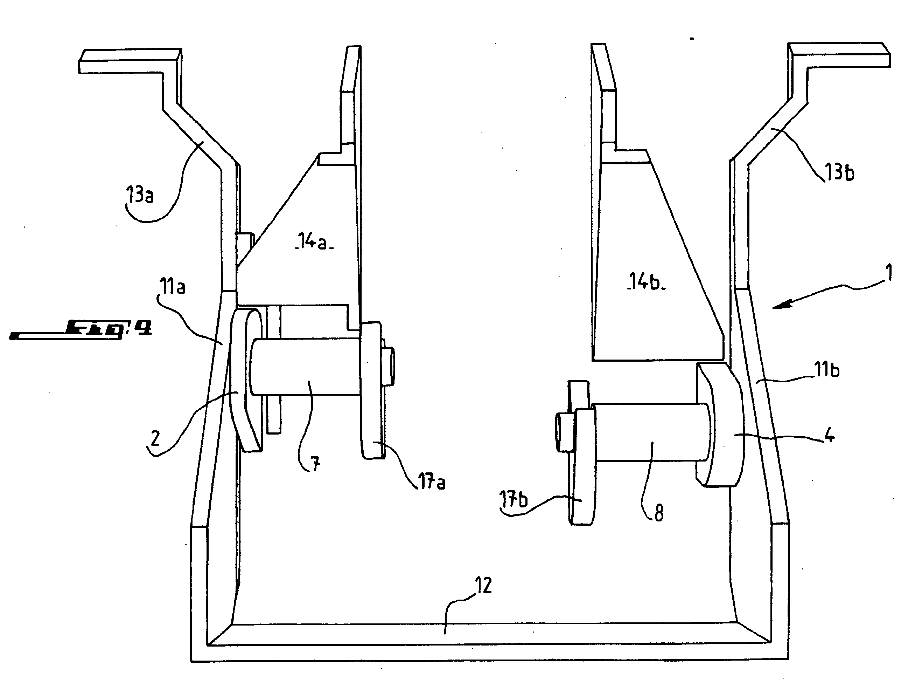

En outre, deux pièces 14a, 14b présentant chacune une rampe 15 et qui sont bien visibles aux figures 2 à 4 sont montées sur le tablier de telle manière que les rampes 15 se trouvent, dans l'état normal de fonctionnement du dispositif c'est-à-dire avant un choc frontal, en face de l'extrémité supérieure 16a et, respectivement, 16b des leviers de commande d'embrayage 2 et de frein 4.

De manière à commander leurs organes d'embrayage et de freinage respectifs, le levier de commande d'embrayage 2 et le levier de commande de frein 4 sont chacun munis d'un système à biellettes 17a et 17b relié aux organes d'embrayage et de freinage respectifs par une tringlerie appropriée. Les biellette 17a et 17b sont montées pivotantes sur un axe commun d'articulation 18 transversal à l'axe longitudinal du véhicule et porté par les deux pièces à rampe 14a et 14b. Comme on le voit aux dessins et plus particulièrement à la figure 2, les extrémités libres supérieures 17c des biellettes 17a et 17b sont en forme de crochets et sont encliquetées sur une tige 19 solidaire des extrémités supérieures 16a, 16b des leviers de commande 2, 4, ce qui assure la liaison des leviers de commande et de leurs biellettes respectives et donc des leviers de commande et des organes d'embrayage et de freinage correspondants.

Le dispositif décrit ci-dessus fonctionne de la manière indiquée ci-après.

En l'absence d'un choc frontal sur le véhicule, une action du conducteur sur la pédale d'embrayage ou de frein agit de manière traditionnelle sur les organes d'embrayage ou de freinage par l'intermédiaire du levier de commande et du système de biellette correspondants.

Au contraire, au moment d'un choc sur le véhicule, le bras horizontal 12 du support de pédalier 6 vient heurter une pièce d'impact solidaire de la structure du véhicule et placée en regard de ce bras à une distance prédéterminée de celui-ci en position normale d'utilisation, c'est-à-dire avant le choc. La pièce d'impact est un élément rigidement lié à la traverse de la planche de bord du véhicule, tel qu'un support colonne destiné à maintenir la colonne de direction par rapport à ladite traverse.

On comprend alors qu'en présence d'un choc frontal sur le véhicule, le pièce d'impact ci-dessus subit une déformation ou un recul quasi nul ou relativement faible au regard de la déformation ou du recul subi par le tablier. Ainsi, le recul du tablier lors d'un choc frontal entraîne du même coup le recul du pédalier avec les inconvénients mentionnés précédemment en l'absence du dispositif de pédalier conforme à l'invention rétractable en cas de choc frontal.

Dans le dispositif selon ce premier mode de réalisation de l'invention, le support de pédalier 6 vient, par son bras horizontal 12, heurter la pièce d'impact. Dans un deuxième mode de réalisation, les pattes 13a et 13b sont fixées à une pièce, par exemple la traverse inférieure de baie, dont la déformation lors d'un choc est plus faible que celle du tablier sur lequel sont fixées les deux pièces à rampe 14a et 14b. Au moment d'un choc sur le véhicule, la déformation relative du tablier par rapport à cette pièce oblige les pattes 13a et 13b à se déformer et induit ainsi le pivotement du support de pédalier 6. Par rapport au premier mode de réalisation, il n'y a donc plus besoin de pièce d'impact pour réaliser la déformation.

Dans les deux modes de réalisation, et du fait de ce qui précède, le support de pédalier 6 pivote alors autour de l'axe horizontal de rotation 9 en direction du tablier suivant la flèche F et ce mouvement déforme par écrasement les pattes 13a, 13b. Les leviers de commande 2, 4 ont alors tendance à remonter de sorte que leurs extrémités supérieures viennent en appui sur les rampes 15 respectives des deux pièces à rampe 14a, 14b pour provoquer le basculement des leviers de commande vers la paroi de fond de la cave à pieds. En même temps que ce mouvement se produit, les extrémités supérieures 17c des biellettes 17a, 17b se dégagent de la tige 19 de sorte que la liaison entre les leviers de commande et leurs biellettes respectives est libérée et que les pédales d'embrayage 3 et de frein 5 deviennent folles.

L'invention n'est cependant pas limitée à l'exemple de réalisation représenté et décrit en détail car diverses modifications peuvent y être apportées, tant qu'elles ne sortent pas du cadre défini par les revendications.

## Revendications

1. Dispositif de pédalier rétractable en cas de choc frontal sur un véhicule, comportant un support de pédalier (6) montable sur le tablier du véhicule dans la cave à pieds de ce dernier et sur lequel est articulé, par l'intermédiaire d'axes d'articulation (7, 8), un levier de commande (4) de la pédale de frein (5), dans lequel le support de pédalier (6) est lui-même articulé sur un axe horizontal de rotation (9) perpendiculaire à l'axe longitudinal du véhicule **caractérise en ce que** sur le support de pédalier (6) est articulé un levier de commande (2) de la pédale d'embrayage (3) par l'intermédiaire d'un axe d'articulation (7) et **en ce que** ce support est porté par des platines (10) solidaires du tablier, ce support de pédalier étant fixable à une pièce solidaire du véhicule par des pattes (13a, 13b) déformables suivant le sens d'un choc frontal, et ce qu'on prévoit deux pièces (14a, 14b) solidaires du tablier et présentant chacune une rampe (15) faisant face à l'extrémité supérieure (16a, 16b) de chaque levier de commande (2, 4) s'étendant au-delà de son axe d'articulation (7, 8) au support de pédalier (6), de sorte que, en l'absence d'un choc frontal, une action sur la pédale (4, 5) du levier de commande correspondant (2, 4) amène ledit levier de commande à agir sur l'embrayage ou le frein, et que, lors d'un choc frontal sur le véhicule, le support de pédalier (6) pivote vers le tablier (flèche F) autour de l'axe horizontal de rotation (9) en déformant par écrasement les pattes (13a, 13b) de sorte que les extrémités supérieures (16a, 16b) des leviers de commande d'embrayage (2) et de frein (4) viennent en appui sur les rampes (15) respectives des deux pièces à rampe (14a, 14b) pour provoquer le basculement des leviers de commande (2, 4) vers la paroi de fond de la cave à pieds.

2. Dispositif selon la revendication 1, **caractérisé en ce que** ladite pièce solidaire du véhicule est le tablier et **en ce que**, lors d'un choc frontal sur le véhicule, le support du pédalier (6) heurte une pièce d'impact solidaire de la structure du véhicule en obligeant les pattes (13a, 13b) à se déformer et en induisant ainsi le pivotement du support de pédalier (6).

3. Dispositif selon la revendication 2, **caractérisé en ce que** la pièce d'impact solidaire de la structure du véhicule est un élément rigidement lié à la traverse de la planche de bord du véhicule, tel qu'un support colonne destiné à maintenir la colonne de direction par rapport à ladite traverse.

4. Dispositif selon la revendication 1, **caractérisé en ce que** ladite pièce solidaire du véhicule est une pièce dont la déformation lors d'un choc est plus faible que celle du tablier et **en ce que**, lors d'un choc frontal sur le véhicule, la déformation relative du tablier par rapport à cette pièce oblige les pattes (13a, 13b) à se déformer et induit ainsi le pivotement du support de pédalier (6).

5. Dispositif selon la revendication 4, **caractérisé en ce que** ladite pièce dont la déformation lors d'un choc est plus faible que celle du tablier est constituée par la traverse inférieure de baie.

6. Dispositif selon l'une des revendications 1 à 5, **caractérisé en ce que** les leviers de commande d'embrayage (2) et de frein (4) agissent sur leurs organes d'embrayage et de freinage respectifs par l'intermédiaire de biellettes de commande (17a, 17b) montées pivotantes sur un axe commun (18) transversal à l'axe du véhicule et porté par les deux pièces à rampe (14a, 14b) et **en ce que**, lors d'un choc frontal sur le véhicule, la liaison entre les extrémités (16a, 16b) des leviers de commande et leurs biellettes respectives (17a, 17b) est libérée de sorte que les pédales d'embrayage (3) et de frein (5) deviennent folles.

7. Dispositif selon l'une des revendications 1 à 6, **caractérisé en ce que** le support de pédalier (6) est en forme d'étrier dont les deux branches latérales (11a, 11b) sont articulées à l'axe horizontal de rotation précité (9) et le bras horizontal (12) de liaison des deux branches latérales (11a, 11b) est disposé en regard de la pièce d'impact à une distance prédéterminée de celle-ci en condition normale d'utilisation.

## Claims

1. Pedal assembly retractable in case of a frontal impact on a vehicle, comprising a pedal support (6) which may be fitted on the dashboard of the vehicle in the space for the feet of the latter, to which a control lever (4) of the brake pedal (5) is connected by means of a hinge pin (7), in which the pedal support (6) is itself connected to a horizontal rotating shaft (9), which is perpendicular to the longitudinal axis of the vehicle, **characterised in that** a control lever (2) of the clutch pedal (3) is connected to the pedal support (6) by means of a hinge pin (7) and the horizontal rotating shaft (9) is carried by plates (10) which are integral with the dashboard, the pedal support being able to be fixed to a part which is integral with the vehicle by brackets (13a, 13b), which can be bent according to the direction of a frontal impact, and that there are two parts (14a, 14b), which are integral with the dashboard, each with a slope (15) facing the top end (16a, 16b) of each control lever (2, 4), extending beyond its hinge pin (7, 8) to the pedal support (6), so that in the absence of a frontal impact, an action on the pedal (4, 5) of the relevant control lever (2, 4) leads this control lever to act on the clutch or brake and when there is a frontal impact on the vehicle, the pedal support (6) pivots towards the dashboard (arrow F) around the horizontal rotating shaft (9), bending the brackets (13a, 13b) by crushing, so that the top ends (16a, 16b) of the clutch (2) and brake (4) control levers are supported on the respective slopes (15) of the two sloping parts (14a 14b) to cause the control levers (2, 4) to tilt towards the back wall of the space for the feet.

2. Device according to claim 1, **characterised in that** this part, which is integral with the vehicle, is the dashboard and when there is a frontal impact on the vehicle, the pedal support (6) hits an impact part, which is integral with the structure of the vehicle, forcing the brackets (13a, 13b) to bend and thus causing the pedal support (6) to pivot.

3. Device according to claim 2, **characterised in that** the impact part, which is integral with the structure of the vehicle, is an element which is connected rigidly to the crosspiece of the instrument panel of the vehicle, such as a column support intended to hold the steering column in relation to this crosspiece.

4. Device according to claim 1, **characterised in that** this part, which is integral with the vehicle, is a part which bends less than the dashboard when there is an impact and **in that** when there is a frontal impact on the vehicle, the relative bending of the dashboard in relation to this part forces the brackets (13a, 13b) to bend and thus causes the pedal support (6) to pivot.

5. Device according to claim 4, **characterised in that** this part, which bends less than the dashboard when there is an impact, is formed by the bottom crosspiece of the opening.

6. Device according to one of claims 1 to 5, **characterised in that** the clutch (2) and brake (4) control levers act on their respective clutch and brake mechanisms by means of control rods (17a, 17b), which are fitted to pivot on a common shaft (18) crosswise to the axis of the vehicle, carried by the two sloping parts (14a, 14b), and **in that** when there is a frontal impact on the vehicle, the link between the ends (16a, 16b) of the control levers and their respective rods (17a, 17b) is released so that the clutch (3) and brake (5) pedals become loose.

7. Device according to one of claims 1 to 6, **characterised in that** the pedal support (6) is in the form of a calliper, the two side branches of which (11a, 11b) are connected to the horizontal rotating shaft indicated above (9) and the horizontal arm (12) connecting the two side branches (11a, 11b) is arranged with the reference to the impact part at a predetermined distance from it under normal conditions of use.

## Patentansprüche

1. Pedalvorrichtung, die bei einem Frontalstoß auf ein Fahrzeug zurückziehbar ist, mit einem Pedalträger (6), der an der Motorraumtrennwand des Fahrzeugs im Fußbereich des letztgenannten montierbar ist und an dem über eine Gelenkachse (7) ein Steuerhebel (4) des Bremspedals (5) angelenkt ist, wobei der Pedalträger (6) selbst an einer horizontal verlaufenden Drehachse (9) angelenkt ist, die senkrecht zur Fahrzeuglängsachse verläuft, **dadurch gekennzeichnet, dass** am Pedalträger (6) ein Steuerhebel (2) des Kupplungspedals (3) über eine Gelenkachse (7) angelenkt ist und dass die horizontal verlaufende Drehachse (9) von fest mit der Trennwand verbundenen Platten (10) abgestützt wird, wobei der Pedalträger an ein fahrzeugfestes Teil über Laschen (13a, 13b) befestigt werden kann, die in Richtung eines Frontalstoßes verformbar sind, und dass zwei fest mit der Trennwand verbundene Teile (14a, 14b) vorgesehen sind, die jeweils eine Rampe (15) aufweisen, die dem oberen Ende (16a, 16b) eines jeden Steuerhebels (2, 4) gegenüberliegt, der sich über seine Gelenkachse (7, 8) am Pedalträger (6) hinaus erstreckt, so dass bei nichtvorhandenem Frontalstoß eine Einwirkung auf das Pedal (4, 5) des entsprechenden Steuerhebels (2, 4) den genannten Steuerhebel dazu bringt, auf die Kupplung bzw. Bremse einzuwirken, und bei einem Frontalstoß auf das Fahrzeug der Pedalträger (6) um die horizontal verlaufende Drehachse (9) zur Trennwand hin schwenkt (Pfeil F), indem er die Laschen (13a, 13b) stauchend verformt, so dass die oberen Enden (16a, 16b) des Kupplungssteuerhebels (2) und des Bremssteuerhebels (4) in Abstützung an die jeweiligen Rampen (15) der beiden Rampenteile (14a, 14b) gelangen, um das Verschwenken der Steuerhebel (2, 4) zur Rückwand des Fußbereichs hervorzurufen.

2. Vorrichtung nach Anspruch 1, **dadurch gekennzeichnet, dass** das fahrzeugfeste Teil die Trennwand ist und dass bei einem Frontalstoß auf das Fahrzeug der Pedalträger (6) an einem fest mit dem Fahrzeugaufbau verbundenen Prallteil aufschlägt, indem er die Laschen (13a, 13b) zwangsweise verformt und so das Verschwenken des Pedalträgers (6) einleitet.

3. Vorrichtung nach Anspruch 2, **dadurch gekennzeichnet, dass** das fest mit dem Fahrzeugaufbau verbundene Prallteil ein starr mit der Querschenkel des Instrumentenbretts des Fahrzeugs verbundenes Element ist, wie etwa ein Säulenträger, der dazu bestimmt ist, die Lenksäule bezüglich des Querschenkels zu halten.

4. Vorrichtung nach Anspruch 1, **dadurch gekennzeichnet, dass** das fahrzeugfeste Teil ein Teil ist, dessen Verformung bei einem Stoß geringer ist als die der Trennwand, und dass bei einem Frontalstoß auf das Fahrzeug die Laschen (13a, 13b) aufgrund der relativen Verformung der Trennwand bezüglich dieses Teils zwangsweise verformt werden und das Verschwenken des Pedalträgers (6) eingeleitet wird.

5. Vorrichtung nach Anspruch 4, **dadurch gekennzeichnet, dass** das Teil, dessen Verformung bei einem Stoß geringer ist als die der Trennwand, aus dem unteren Frontscheibenquerschenkel besteht.

6. Vorrichtung nach einem der Ansprüche 1 bis 5, **dadurch gekennzeichnet, dass** der Kupplungssteuerhebel (2) und der Bremssteuerhebel (4) auf ihre jeweiligen Kupplungs- bzw. Bremsorgane über Steuerschwenkarme (17a, 17b) einwirken, die schwenkbeweglich an einer gemeinsamen Achse (18) gelagert sind, die quer zur Fahrzeugachse verläuft und von den beiden Rampenteilen (14a, 14b) abgestützt wird, und dass bei einem Frontalstoß auf das Fahrzeug die Verbindung zwischen den Enden (16a, 16b) der Steuerhebel und ihren jeweiligen Schwenkarmen (17a, 17b) gelöst wird, so dass das Kupplungspedal (3) und das Bremspedal (5) lose werden.

7. Vorrichtung nach einem der Ansprüche 1 bis 6, **dadurch gekennzeichnet, dass** der Pedalträger (6) in Form eines Bügels vorliegt, von dem die beiden Seitenschenkel (11a, 11b) an der horizontal verlaufenden Drehachse (9) angelenkt sind und der horizontale Schenkel (12), der die beiden Seitenschenkel (11a, 11b) verbindet, dem Prallteil gegenüberliegt, und zwar mit einem vorbestimmten Abstand von diesem Teil im normalen Benutzungszustand.
